# FASCICULE DE BREVET EUROPEEN

(11) **EP 1 186 842 B1**
(45) Date de publication et mention de la délivrance du brevet: **17.11.2004**
(21) Numéro de dépôt: 01402294.1
(22) Date de dépôt: 04.09.2001
(51) Int. Cl.: F25D 3/12, C01B 31/22

(54) **Procédé et dispositif d'emballage de neige carbonique dans un film plastique**
Verfahren und Vorrichtung zur Verpackung von Kohlendioxidschnee mittels eines Kunststoffilms
Process and device for the packaging of carbon dioxide snow in a plastic film

(30) Priorité: 11.09.2000 FR 0011517
(43) Date de publication de la demande: 13.03.2002
(73) Titulaire: L'AIR LIQUIDE, S.A. à Directoire et Conseil de Surveillance pour l'Etude et l'Exploitation des Procédés Georges Claude, 75321 Paris Cedex 07 (FR)
(72) Inventeur: Gibot, Claude, 93390 Clichy sous Bois (FR); Lenfant, Gérard, 94000 Créteil (FR); Benedetti, Xavier, 75005 Paris (FR)
(74) Mandataire: Ducreux, Marie

(56) Documents cités:
- EP-A- 0 823 600
- FR-A- 2 518 237
- FR-A- 2 604 243
- FR-A- 2 780 145
- FR-A- 2 783 904
- US-A- 5 148 679
- US-A- 5 271 233

## Description

La présente invention concerne un procédé et un dispositif d'emballage de neige carbonique dans des sacs plastiques.

Il est connu que les produits congelés ou surgelés, notamment alimentaires devant être maintenus à basse température (de l'ordre de - 20°C ou moins) sans rupture de leur chaîne de froid depuis leur congélation ou leur surgélation jusqu'à leur utilisation, nécessitent des entrepôts, moyens de transport, et magasins, munis d'installations de réfrigération, qui sont actuellement généralement électriques. Cependant, dans de nombreux cas, par exemple pour un transport non motorisé, il est impossible de transporter les produits sans les sortir de l'installation de réfrigération où ils sont entreposés, et les risques d'une remontée en température sont importants si les conditions climatiques sont défavorables. En vue d'éviter une telle remontée en température lors de leur transport, il est habituel de disposer les produits congelés ou surgelés dans un environnement de glace carbonique, la glace étant procurée à l'acquéreur des produits par le distributeur des produits, généralement à titre gracieux. Une certaine méconnaissance des techniques du froid de la part des distributeurs et des clients, les conduit le plus souvent à surestimer volontairement, par précaution, la quantité de glace nécessaire, et il en résulte des dépenses inutiles importantes pour le distributeur. Dès lors, il a été proposé de remplacer la glace carbonique par de la neige carbonique qui est un produit relativement peu onéreux et présentant un meilleur pouvoir réfrigérant, sa température de - 80 °C environ assurant un temps de conservation au froid des produits plus long. Ainsi, il a été décrit dans la demande FR-A1-2 604 243, de distribuer de la neige carbonique dans des sacs, cartons ou récipients à placer avec les produits à conserver. Dans cette demande, il a été décrit un appareil d'ensachage de neige carbonique comprenant :
- des moyens de distribution en continu d'une bande souple poreuse,
- des moyens de conformation en tube de la bande amenée à traverser un fourreau préconformateur
- une canne d'injection d'anhydride carbonique liquide disposée dans le tube en amont du fourreau préconformateur,
- un train entraîneur et conformateur disposé en aval du fourreau préconformateur et agissant sur le tube rempli de neige carbonique,
- un poste de découpe du tube et de la neige carbonique prise en masse.

Lorsque ce type d'appareil d'ensachage est utilisé avec un film plastique, on rencontre un problème de fermeture du tube plastique. En effet, il a été observé que lorsque la neige carbonique, qui se présente sous forme pulvérulente à la sortie du générateur de neige carbonique, est introduite dans le tube plastique, des particules de neige ont tendance à être renvoyées vers le générateur. De nombreuses particules de neige restent donc dans l'espace se trouvant entre les deux bords du film destinés à être thermosoudés ensembles. La présence de ce solide à - 80°C au niveau des mâchoires de thermosoudage empêche une fermeture efficace du sachet. Ce phénomène est d'autant plus marqué lorsque l'appareil n'a pas fonctionné durant un certain laps de temps, par exemple de l'ordre d'une demi-heure ou au démarrage.

Le but de la présente invention est de proposer un appareil d'ensachage de neige carbonique dans des sacs plastiques ne présentant pas le problème précédent.

Dans ce but, l'invention concerne un procédé d'emballage de neige carbonique dans un conteneur en film plastique, dans lequel on met en oeuvre les étapes suivantes :
a - on injecte un fluide présentant une température inférieure à la température de rosée de l'air au contact et à l'intérieur du conteneur en film plastique, puis
b - on introduit la neige carbonique dans le conteneur en film plastique, puis
c - on ferme le conteneur en film plastique.

L'invention concerne également un dispositif d'emballage de neige carbonique dans du film plastique, comprenant :
- des moyens de distribution, de mise en forme et de déplacement du film plastique,
- une source de dioxyde de carbone liquide,
- un moyen pour l'injection d'un fluide présentant une température inférieure à la température de rosée de l'air au contact et à l'intérieur du film plastique mis en forme, relié à une source dudit fluide,
- un générateur de neige carbonique relié à la source de dioxyde de carbone liquide et placé de manière à remplir le film plastique mis en forme,
- des moyens de scellage du film plastique mis en forme.

D'autres caractéristiques et avantages de l'invention apparaîtront à la lecture de la description qui va suivre. Des formes et des modes de réalisation de l'invention sont donnés à titre d'exemples non limitatifs, illustrés par les dessins joints dans lesquels :
- la figure 1 est une vue schématique d'un dispositif selon l'invention,
- la figure 2 est une vue schématique d'un dispositif d'ensachage,
- la figure 3 est un détail du dispositif de la figure 1.

L'invention concerne donc un procédé d'emballage de neige carbonique dans un conteneur en film plastique, dans lequel on met en oeuvre les étapes suivantes :
a - on injecte un fluide présentant une température inférieure à la température de rosée de l'air au contact et à l'intérieur du conteneur en film plastique, puis
b - on introduit la neige carbonique dans le conteneur en film plastique, puis
c - on ferme le conteneur en film plastique.

Une des caractéristiques essentielles de l'invention tient à ce que préalablement à l'introduction de la neige carbonique dans le conteneur en film plastique, un fluide présentant une température inférieure à la température de rosée de l'air est injecté au contact et à l'intérieur du conteneur en film plastique. Le conteneur peut ensuite être rempli de neige carbonique puis fermé, notamment par thermosoudage, sans problème.

Selon le mode de mis en oeuvre préféré de l'invention, le fluide présentant une température inférieure à la température de rosée de l'air est du dioxyde de carbone liquide. Ainsi, au cours de l'étape a, il suffit d'injecter une petite quantité de dioxyde de carbone liquide de manière à refroidir la paroi intérieure du conteneur en film plastique à une température inférieure à la température de rosée de l'air. Généralement, quelques grammes de dioxyde de carbone liquide à - 80°C ou une giclée de ce dernier provenant d'un capillaire suffisent.

Le film plastique est généralement choisi parmi les matières permettant l'évacuation du dioxyde de carbone gazeux issu de la sublimation de la neige carbonique. Cette propriété peut être obtenue par porosité du film plastique qui peut être microporeux ou présenter des microperforations. Ainsi, le film plastique peut être choisi de manière à ce que les perforations permettent l'échappement de la masse importante de gaz de détente et aussi la rétention et le confinement des fins cristaux constitutifs de la neige carbonique. Les microperforations peuvent être réalisées lors de la fabrication du film plastique ou au cours du procédé selon l'invention, par exemple dans une étape préalable de préparation du film plastique tel que par le passage du film plastique sur des picots perforateurs. De préférence, le film plastique est thermosoudable. Il est également préférable, d'une part, qu'il soit suffisamment résistant pour supporter la pression de la neige carbonique lors de son remplissage et de sa manipulation, et, d'autre part, suffisamment isolant thermiquement pour éviter tout risque de brûlure par le froid lors de ses manipulations ; ces deux propriétés peuvent être obtenues par le choix d'une épaisseur de matériau suffisamment importante. De plus, dans le cas où le conteneur est destiné à une utilisation dans le domaine alimentaire, le matériau choisi doit naturellement être approprié à cette utilisation. Enfin, il est généralement préférable que le film plastique soit biodégradable compte-tenu du respect de l'environnement. Selon le mode préféré de l'invention, le film plastique est du polypropylène microperforé d'une épaisseur de 30 µm.

Selon une variante de l'invention, le procédé peut comprendre une étape préalable de mise en forme du conteneur, par exemple par mise en forme de tube d'une bande de film plastique par thermosoudage.

Selon un mode préféré de l'invention, les étapes a, b et c sont mises en oeuvre de manière cadencée. Les durées des étapes a et c sont généralement fixes et constantes, tandis que la durée de l'étape b peut être variable selon la quantité de neige carbonique que l'on souhaite produire et emballer dans le film plastique

Selon une variante de l'invention, le dioxyde de carbone gazeux issu de la vaporisation du dioxyde de carbone liquide injecté au cours de l'étape a dans le conteneur est évacué le long du générateur de neige carbonique. Ceci permet de réfrigérer le générateur de neige carbonique et d'améliorer le ratio de transformation du dioxyde de carbone liquide en neige. On peut assurer le rendement optimal de transformation du dioxyde de carbone liquide en neige carbonique qui est de 47 %. Le dioxyde de carbone gazeux évacué le long du générateur de neige carbonique est généralement rejeté en dehors des locaux d'emballage de la neige carbonique pour des raisons de sécurité.

Généralement, le dioxyde de carbone liquide, qui est injecté à l'intérieur et au contact du conteneur en film plastique au cours de l'étape a, et la neige carbonique proviennent de la même source de dioxyde de carbone liquide. La source de dioxyde de carbone peut être une bouteille de dioxyde de carbone sous pression à l'état liquide, mais de préférence, il s'agit plutôt d'une source de dioxyde de carbone liquide basse pression réfrigérée car ce type de source conduit à un meilleur rendement en génération de neige carbonique. Dans ce second cas, les conditions de stockage de la source de dioxyde de carbone liquide peuvent, par exemple, être une température de - 20°C et une pression d'environ 20 bars, voire moins.

Lorsque le dioxyde de carbone liquide sous pression est libéré et transféré dans le générateur de neige carbonique, il se détend à la pression atmosphérique, ce qui engendre la formation d'un solide sous forme pulvérulente connu sous le nom de neige carbonique, à une température très inférieure à 0°C, de l'ordre de - 80°C, et de dioxyde de carbone à l'état gazeux. Plus précisément, la consultation du diagramme de Mollier montre qu'une quantité donnée de dioxyde de carbone liquide sous une pression de 20 bars se transforme alors à raison de 53 % en gaz et de 47 % en solide.

L'invention concerne également un dispositif d'emballage de neige carbonique dans du film plastique, comprenant :
- des moyens de distribution, de déplacement et de mise en forme du film plastique,
- une source de dioxyde de carbone liquide,
- un moyen pour l'injection d'un fluide présentant une température inférieure à la température de rosée de l'air au contact et à l'intérieur du film plastique mis en forme, relié à une source dudit fluide,
- un générateur de neige carbonique relié à la source de dioxyde de carbone liquide et placé de manière à remplir le film plastique mis en forme,
- des moyens de scellage du film plastique mis en forme.

Les moyens de distribution, de mise en forme et de déplacement du film plastique sont ceux habituellement mis en oeuvre dans les dispositifs d'emballage connus. Généralement, ces moyens consistent à distribuer en continu une bande de film plastique, à la conformer en tube par enroulement sur un fourreau préconformateur, à sceller les deux bords du tube se rejoignant, à faire glisser le tube obtenu en aval du fourreau préconformateur. Les moyens de scellage du film plastique, une fois ce dernier mis en forme, permettent de fermer par thermosoudage, puis de découper le tube au niveau du film soudé pour obtenir un sachet. Dans ce cas, le générateur de neige carbonique est placé à l'intérieur du fourreau conformateur, de manière à ce que la neige produite soit dirigée dans le sachet en formation. De préférence, les moyens de distribution et de mise en forme du film plastique sont mis en place de manière de manière à former un sachet vertical dont l'ouverture est sur le côté supérieur, et le générateur de neige carbonique est orienté verticalement de manière à ce que la neige carbonique formée tombe par gravité dans le sachet plastique mis en forme et qu'une fois ce dernier scellé et découpé, le sachet comprenant la neige carbonique tombe également par gravité.

De préférence, le moyen pour l'injection du fluide présentant une température inférieure à la température de rosée de l'air est un capillaire orienté vers la surface intérieure du film plastique mis en forme. Selon une variante avantageuse, ce moyen est relié à la source de dioxyde de carbone liquide. Une vanne, généralement une électrovanne, est interposée entre le capillaire et la source de dioxyde de carbone liquide de manière à déclencher et arrêter la fourniture de dioxyde de carbone liquide. Une vanne, généralement une électrovanne, est également interposée entre le générateur de neige carbonique et la source de dioxyde de carbone liquide de manière à déclencher et arrêter la fourniture de neige carbonique. Lorsque le dispositif selon l'invention est mis en marche, l'électrovanne du capillaire est ouverte, puis fermée, avant que l'électrovanne du générateur de neige carbonique soit ouverte. Les vannes peuvent être commandées par une minuterie déterminant leur temps d'ouverture et donc la dose de neige carbonique à emballer. La minuterie peut être déclenchée par un monnayeur. Selon un mode de la variante précédente du dispositif, celui-ci comprend au moins un moyen d'évacuation du dioxyde de carbone gazeux. Si le dispositif comprend un générateur de neige carbonique placé à l'intérieur d'un fourreau préconformateur du film plastique, le moyen d'évacuation du gaz peut être constitué par l'espace formé entre la paroi extérieure du générateur et la paroi intérieure de fourreau.

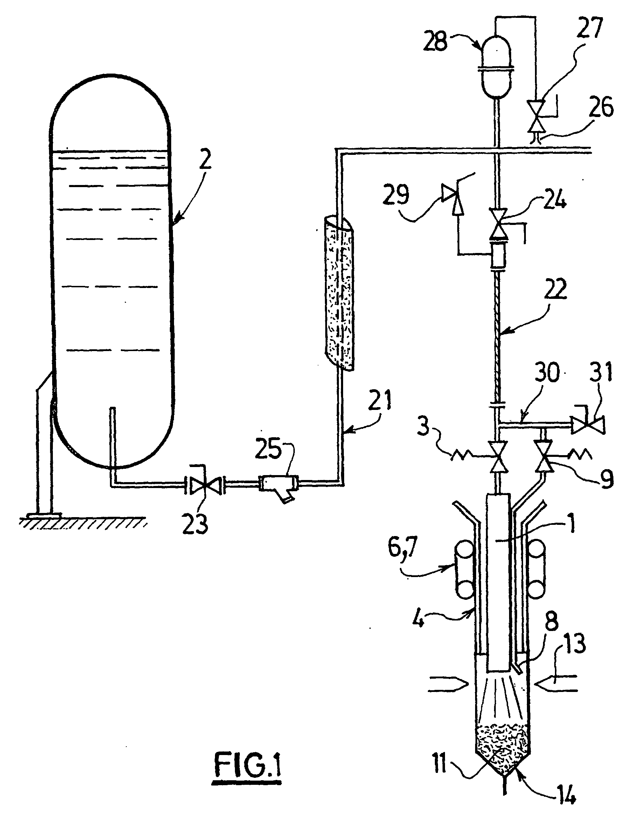

Les figures 1, 2 et 3 illustrent le dispositif et le procédé selon l'invention. Le générateur de neige carbonique (1) est relié à un réservoir réfrigéré de dioxyde de carbone liquide (2) par l'intermédiaire d'une tuyauterie calorifugée (21) et d'un flexible calorifugé (22). Un filtre (25) et des vannes de barrage (23, 24) peuvent être placées entre la source de dioxyde de carbone (2) et le générateur (1), l'une d'elles pouvant notamment être placée entre la tuyauterie et le flexible. Sur la tuyauterie calorifugée, on peut également prévoir un orifice (26) relié à une vanne de barrage (27) donnant sur un pot dégazeur (28), la partie inférieure du pot dégazeur étant branchée sur la tuyauterie calorifugée (21). Une soupape (29) peut également être présente entre le flexible (22) et la tuyauterie (21).

Le flexible (22) débouche sur une tuyauterie (30) se divisant en trois :
- vers le générateur (1),
- vers le capillaire d'injection de dioxyde carbone liquide (8),
- vers une purge. La purge peut être reliée à la source dioxyde de carbone (2) (liaison non représentée sur la figure).

Ces trois branches de la tuyauterie en aval du flexible (22) sont chacunes équipées de vannes :
- une électrovanne (3) pour la branche reliée au générateur (1),
- une électrovanne (9) pour la branche reliée au capillaire (8),
- une vanne de purge (31) pour la dernière branche.

Le générateur de neige carbonique (1) est placé à l'intérieur du fourreau conformateur (4) d'une ensacheuse verticale.

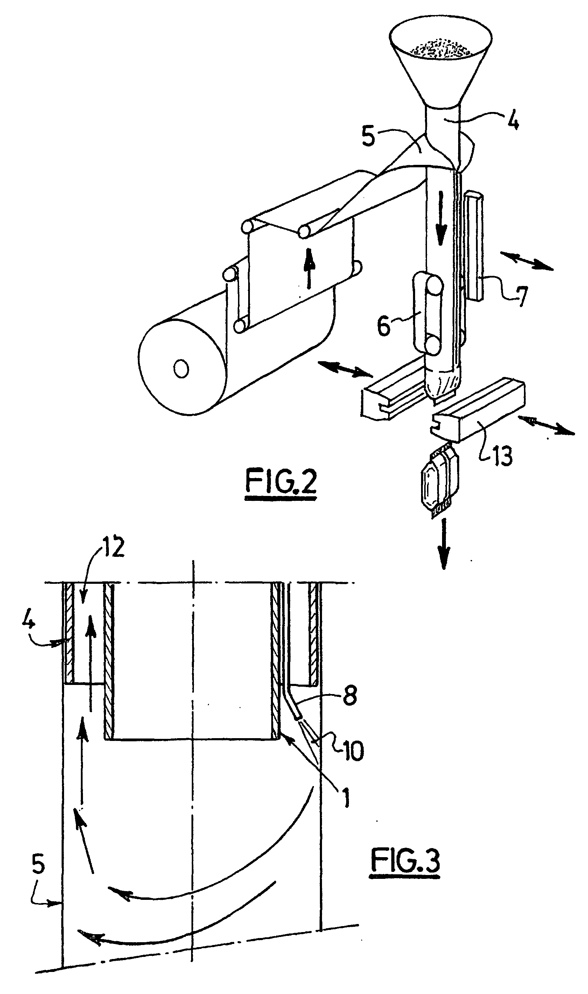

Lorsque le procédé est mis en oeuvre, le film en plastique (5) est enroulé sur lui-même pour former un tube pris en charge par le fourreau conformateur (4). L'enroulement du film est réalisé de manière à rapprocher les deux bords verticaux du film : ces bords sont amenés à se chevaucher, puis coller par thermosoudage par des moyens de scellage verticaux (7) sur toute leur longueur. Le tube formé est déplacé vers le bas par des poulies de guidage (6) de manière à former un sachet en plastique (14) pour l'introduction de neige carbonique. Sur la figure 2, les flèches indiquent les mouvements de déplacement des moyens de mise en forme, déplacement et scellage. Une fois le sachet formé, l'électrovanne (9) placée en amont du capillaire d'injection de dioxyde de carbone liquide (8) s'ouvre : le dioxyde de carbone liquide (10) sort du bout du capillaire (8) orienté de manière à diriger le dioxyde de carbone liquide au contact et à l'intérieur du sachet plastique mis en forme. Puis, l'électrovanne (9) est fermée et électrovanne (3) est ouverte : le générateur (1) produit alors de la neige carbonique (11) qui tombe par gravité dans le sachet en plastique (14). L'électrovanne (3) est fermée. Le gaz carbonique est évacué par l'espace (12) formé entre le fourreau conformateur (4) du film plastique et le générateur de neige carbonique (1). Enfin, les outils de scellage (13) de l'ensacheuse ferment le plastique par thermosoudage et coupent le plastique soudé pour former un sachet fermé.

Par mise en oeuvre d'un dispositif tel que précédemment décrit, le temps qui s'écoule entre l'ouverture de l'électrovanne du capillaire et l'obtention du sachet de neige carbonique est de quelques secondes seulement, par exemple environ 12 secondes, pour l'injection d'une dose de neige carbonique de 250 g, réparties de la manière suivante,:
- 2 secondes d'ouverture de l'électrovanne du capillaire,
- 7 secondes d'injection de neige carbonique
- 3 secondes de confection du sachet.

On ne rencontre aucun problème à la fermeture par thermosoudage du sachet en plastique même si le dispositif n'est pas mis en oeuvre de manière continue.

## Revendications

1. Procédé d'emballage de neige carbonique dans un conteneur en film plastique, dans lequel on met en oeuvre les étapes suivantes :
a - on injecte un fluide présentant une température inférieure à la température de rosée de l'air au contact et à l'intérieur du conteneur en film plastique, puis
b - on introduit la neige carbonique dans le conteneur en film plastique, puis
c - on ferme le conteneur en film plastique.

2. Procédé selon la revendication 1, **caractérisé en ce que** le fluide présentant une température inférieure à la température de rosée est du dioxyde de carbone liquide.

3. Procédé selon la revendication 1 ou 2, **caractérisé en ce qu'**au cours de l'étape c, le conteneur en plastique est fermé par thermosoudage.

4. Procédé selon l'une des revendications précédentes, **caractérisé en ce que** le film plastique est choisi parmi les matières permettant l'évacuation du dioxyde de carbone gazeux issu de la sublimation de la neige carbonique.

5. Procédé selon la revendication précédente, **caractérisé en ce que** le film plastique est thermosoudable.

6. Procédé selon l'une des revendications précédentes, **caractérisé en ce qu'**il comprend une étape préalable de formation du conteneur.

7. Procédé selon l'une des revendications précédentes, **caractérisé en ce que** les étapes a, b et c sont mises en oeuvre de manière cadencée.

8. Procédé selon la revendication 2 et l'une des revendications 3 à 7, **caractérisé en ce que** le dioxyde de carbone gazeux issu de la vaporisation du dioxyde de carbone liquide injecté est évacué le long de la paroi extérieure du générateur de neige carbonique utilisé pour l'introduction de la neige carbonique dans le conteneur.

9. Procédé selon la revendication 2 et l'une des revendications 3 à 8, **caractérisé en ce que** le dioxyde de carbone liquide et la neige carbonique proviennent de la même source de dioxyde de carbone liquide.

10. Dispositif d'emballage de neige carbonique dans du film plastique (5), comprenant :
- des moyens de distribution, de mise en forme (4, 7) et de déplacement (6) du film plastique,
- une source de dioxyde de carbone liquide (2),
- un moyen (8) pour l'injection d'un fluide présentant une température inférieure à la température de rosée de l'air au contact et à l'intérieur du film plastique mis en forme, relié à une source dudit fluide,
- un générateur de neige carbonique (1) relié à la source de dioxyde de carbone liquide (2) et placé de manière à remplir le film plastique mis en forme,
- des moyens de scellage (13) du film plastique mis en forme.

11. Dispositif selon la revendication précédente, **caractérisé en ce que** le moyen (8) pour l'injection du fluide présentant une température inférieure à la température de rosée de l'air est un capillaire orienté vers la surface intérieure du film plastique mis en forme.

12. Dispositif selon la revendication 10 ou 11, **caractérisé en ce que** le moyen (8) pour l'injection d'un fluide présentant une température inférieure à la température de rosée de l'air est relié à la source de dioxyde de carbone liquide (2).

13. Dispositif selon la revendication 12, **caractérisé en ce qu'**il comprend au-dessus du film plastique mis en forme un moyen (12) d'évacuation du dioxyde de carbone gazeux.

14. Dispositif selon l'une des revendications 10 à 13, **caractérisé en ce qu'**une vanne (3) est interposée entre le générateur de neige carbonique (1) et la source de dioxyde de carbone liquide (2) de manière à déclencher et arrêter la fourniture de neige carbonique.

15. Dispositif selon la revendication 14, **caractérisé en ce que** la vanne (3) est commandée par une minuterie déterminant son temps d'ouverture.

16. Dispositif selon la revendication 15, **caractérisé en ce que** la minuterie est déclenchée par un monnayeur.

## Claims

1. Method for packaging carbon dioxide snow in a plastic film container, in which method the following steps are employed:
a - a fluid which has a temperature below the dew point of the air is injected into and in contact with the plastic film container, then
b - the carbon dioxide snow is introduced into the plastic film container, then
c - the plastic film container is closed.

2. Method according to Claim 1, **characterized in that** the fluid which has a temperature below the dew point is liquid carbon dioxide.

3. Method according to Claim 1 or 2, **characterized in that** during step c, the plastic container is closed by thermal welding.

4. Method according to one of the preceding claims, **characterized in that** the plastic film is chosen from materials allowing the removal of the gaseous carbon dioxide that results from the sublimation of the carbon dioxide snow.

5. Method according to the preceding claim, **characterized in that** the plastic film can be hot welded.

6. Method according to one of the preceding claims, **characterized in that** it comprises a prior step of shaping the container.

7. Method according to one of the preceding claims, **characterized in that** steps a, b and c are employed in step.

8. Method according to Claim 2 and one of Claims 3 to 7, **characterized in that** the gaseous carbon dioxide resulting from the vaporization of the liquid carbon dioxide injected is removed along the outer wall of the carbon dioxide snow generator used for introducing the carbon dioxide snow into the container.

9. Method according to Claim 2 and one of Claims 3 to 8, **characterized in that** the liquid carbon dioxide and the carbon dioxide snow come from the same source of liquid carbon dioxide.

10. Device for packaging carbon dioxide snow in plastic film (5), comprising:
- means for dispensing, shaping (4, 7) and moving (6) the plastic film,
- a source of liquid carbon dioxide (2),
- a means (8) for injecting a fluid which has a temperature below the dew point of air into and in contact with the shaped plastic film and connected to a source of the said fluid,
- a carbon dioxide snow generator (1) connected to the source of liquid carbon dioxide (2) and positioned in such a way as to fill the shaped plastic film,
- means (13) for sealing the shaped plastic film.

11. Device according to the preceding claim, **characterized in that** the means (8) for injecting the fluid which has a temperature below the dew point of the air is a capillary tube oriented towards the interior surface of the shaped plastic film.

12. Device according to Claim 10 or 11, **characterized in that** the means (8) for injecting a fluid which has a temperature below the dew point of air is connected to the source of liquid carbon dioxide (2).

13. Device according to Claim 12, **characterized in that** it comprises, above the shaped plastic film, a means (12) for removing the gaseous carbon dioxide.

14. Device according to one of Claims 10 to 13, **characterized in that** a valve (3) is inserted between the carbon dioxide snow generator (1) and the source of liquid carbon dioxide (2), so as to start and stop the supply of carbon dioxide snow.

15. Device according to Claim 14, **characterized in that** the valve (3) is operated by a timer determining the time it remains open.

16. Device according to Claim 15, **characterized in that** the timer is started by a pay station.

## Patentansprüche

1. Verfahren zur Verpackung von Kohlendioxidschnee in einem Kunststofffilmbehälter, bei dem die folgenden Schritte zum Einsatz kommen:
a- Einspritzen eines Fluids, das eine geringere Temperatur als die Tautemperatur der in Kontakt befindlichen Luft und die Temperatur innerhalb des Kunststofffilmbehälters aufweist, dann
b- Einleiten des Kohlendioxidschnees in den Kunststoffbehälter, dann
c- Schließen des Kunststofffilmbehälters.

2. Verfahren nach Anspruch 1, **dadurch gekennzeichnet, dass** das Fluid, das eine geringere Temperatur als die Tautemperatur aufweist, flüssiges Kohlendioxid ist.

3. Verfahren nach Anspruch 1 oder 2, **dadurch gekennzeichnet, dass** während des Schrittes c der Kunststoffbehälter durch Heißsiegeln verschlossen wird.

4. Verfahren nach einem der vorhergehenden Ansprüche, **dadurch gekennzeichnet, dass** der Kunststofffilm unter den Materialien ausgewählt wird, die die Ableitung des gasförmigen Kohlendioxids, das aus der Sublimation des Kohlendioxidschnees stammt, ermöglichen.

5. Verfahren nach dem vorhergehenden Anspruch, **dadurch gekennzeichnet, dass** der Kunststofffilm heißsiegelfähig ist.

6. Verfahren nach einem der vorhergehenden Ansprüche, **dadurch gekennzeichnet, dass** es einen vorherigen Schritt der Ausbildung des Behälters umfasst.

7. Verfahren nach einem der vorhergehenden Ansprüche, **dadurch gekennzeichnet, dass** die Schritte a, b und c in einer zeitlichen Abfolge durchgeführt werden.

8. Verfahren nach Anspruch 2 und einem der Ansprüche 3 bis 7, **dadurch gekennzeichnet, dass** das gasförmige Kohlendioxid, das aus der Verdampfung des eingespritzten flüssigen Kohlendioxids stammt, entlang der Außenwand des Kohlendioxidschneegenerators, der für die Einleitung des Kohlendioxidschnees in den Behälter verwendet wird, abgeleitet wird.

9. Verfahren nach Anspruch 2 und einem der Ansprüche 3 bis 8, **dadurch gekennzeichnet, dass** das flüssige Kohlendioxid und der Kohlendioxidschnee von derselben Quelle von flüssigem Kohlendioxid stammen.

10. Vorrichtung zur Verpackung von Kohlendioxidschnee in einen Kunststofffilm (5), umfassend:
- Mittel zur Verteilung, Formung (4, 7) und Verschiebung (6) des Kunststofffilms,
- eine Quelle von flüssigem Kohlendioxid (2),
- ein Mittel (8) zum Einspritzen eines Fluids, das eine geringere Temperatur als die Tautemperatur der in Kontakt befindlichen Luft und die Temperatur innerhalb des geformten Kunststofffilms aufweist, das mit einer Quelle dieses Fluids verbunden ist,
- einen Generator von Kohlendioxidschnee (1), der mit der Quelle von flüssigem Kohledioxid (2) verbunden und derart angeordnet ist, dass er den geformten Kunststofffilm befüllt,
- Mittel zum Versiegeln (13) des geformten Kunststofffilms.

11. Vorrichtung nach dem vorhergehenden Anspruch, **dadurch gekennzeichnet, dass** das Mittel (8) zum Einspritzen des Fluids, das eine geringere Temperatur als die Tautemperatur der Luft aufweist, eine Kapillare ist, die zu der Unterseite des geformten Kunststofffilms ausgerichtet ist.

12. Vorrichtung nach Anspruch 10 oder 11, **dadurch gekennzeichnet, dass** das Mittel (8) zum Einspritzen eines Fluids, das eine geringere Temperatur als die Tautemperatur der Luft aufweist, mit der Quelle von flüssigem Kohlendioxid (2) verbunden ist.

13. Vorrichtung nach Anspruch 12, **dadurch gekennzeichnet, dass** sie über dem geformten Kunststofffilm ein Mittel (12) zum Ableiten des gasförmigen Kohlendioxids umfasst.

14. Vorrichtung nach einem der Ansprüche 10 bis 13, **dadurch gekennzeichnet, dass** ein Ventil (3) zwischen dem Generator von Kohlendioxidschnee (1) und der Quelle von flüssigem Kohlendioxid (2) angeordnet ist, um die Lieferung von Kohlendioxidschnee auszulösen oder zu stoppen.

15. Vorrichtung nach Anspruch 14, **dadurch gekennzeichnet, dass** das Ventil (3) von einem Zeitschalter gesteuert wird, der seine Öffnungszeit bestimmt.

16. Vorrichtung nach Anspruch 15, **dadurch gekennzeichnet, dass** der Zeitschalter von einem Münzapparat ausgelöst wird.
